# EUROPEAN PATENT APPLICATION

(11) **EP 1 462 845 A1**
(43) Date of publication of application: **29.09.2004**
(21) Application number: 04251853.0
(22) Date of filing: 29.03.2004
(51) Int. Cl.: G02F 1/1339

(54) **Liquid crystal display**

(30) Priority: 28.03.2003 KR 2003019564
(71) Applicant: Samsung Electronics Co., Ltd., Suwon-si, Gyeonggi-do (KR)
(72) Inventor: Chang, Hak-Sun, Kangnam-gu Seoul (KR); Lee, Chang-Hun, Yehyun Maeul Hyundai Home, Yongin-si Gyeonggi-do (KR)
(74) Representative: Greene, Simon Kenneth

(57) **Abstract**

A liquid crystal display (LCD) comprises two substrates (110,210), plurality of gate lines (121), plurality of data lines (171), two polarizers (12,22), one or two compensators (13,23), liquid crystal material (3) aligned parallel or antiparallel, spacers (320) of ball type or column type, white (transparent) or black spacers (320) positioned between the two substrates (110,210), the dispersion of the birefringence of liquid crystal material (3) is bigger than the dispersion of the birefringence of the compensation material (13,23).

## Description

The present invention relates to a liquid crystal display.

A typical liquid crystal display (LCD) includes an upper panel provided with a common electrode and color filters, etc., a lower panel provided with a plurality of thin film transistors (TFTs) and a plurality of pixel electrodes, etc., and a liquid crystal (LC) layer filled in a gap between the panels. The gap between the panels is supported by a plurality of spacers. The pixel electrodes and the common electrode are supplied with different voltages to generate electric field changing the orientations of LC molecules, thereby controlling light transmittance to display images.

An optical compensated birefringency (OCB) mode is known.

The present invention is directed to a liquid crystal display(LCD) as set out in claim 1. The liquid crystal comprises two substrates, liquid crystal layer aligned antiparallelly, two polarizer films crossed each other, one compensation film or two compensation films crossing each other, spacers sustaining the gap between the two substrates. The number of the spacers is confined or the transmittance of the spacers is confined to certain value.

Above mentioned LCD shows a wide viewing angle, a high contrast ratio and a low black luminance.

Fig. 1 is a layout view of an LCD according to an embodiment of the present invention.

Fig. 2 is a sectional view of the LCD shown in Fig. I according to the first embodiment of the present invention taken along the line II-II'.

Fig. 3 illustrates indicatrices of light transmitting media at places provided without spacers in an OCB mode LCD when viewing from the front of the LCD.

Fig. 4 illustrates indicatrices of light transmitting media at places provided with spacers in an OCB mode LCD when viewing from the front of the LCD.

The present invention now will be described more fully hereinafter with reference to the accompanying drawings, in which preferred embodiments of the invention are shown. The present invention may, however, be embodied in many different forms and should not be construed as limited to the embodiments set forth herein.

In the drawings, the thickness of layers, films and regions are exaggerated for clarity. Like numerals refer to like elements throughout. It will be understood that when an element such as a layer, film, region or substrate is referred to as being "on" another element, it can be directly on the other element or intervening elements may also be present. In contrast, when an element is referred to as being "directly on" another element, there are no intervening elements present.

Now, liquid crystal displays according to embodiments of the present invention will be described with reference to the accompanying drawings.

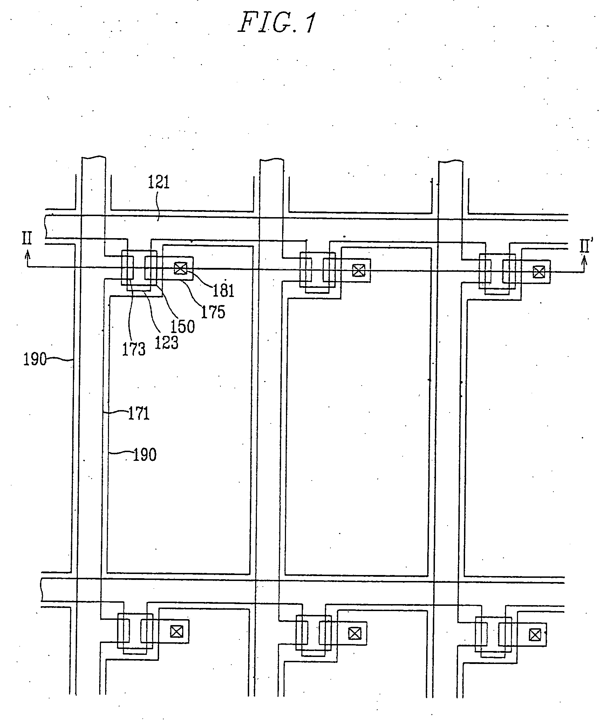

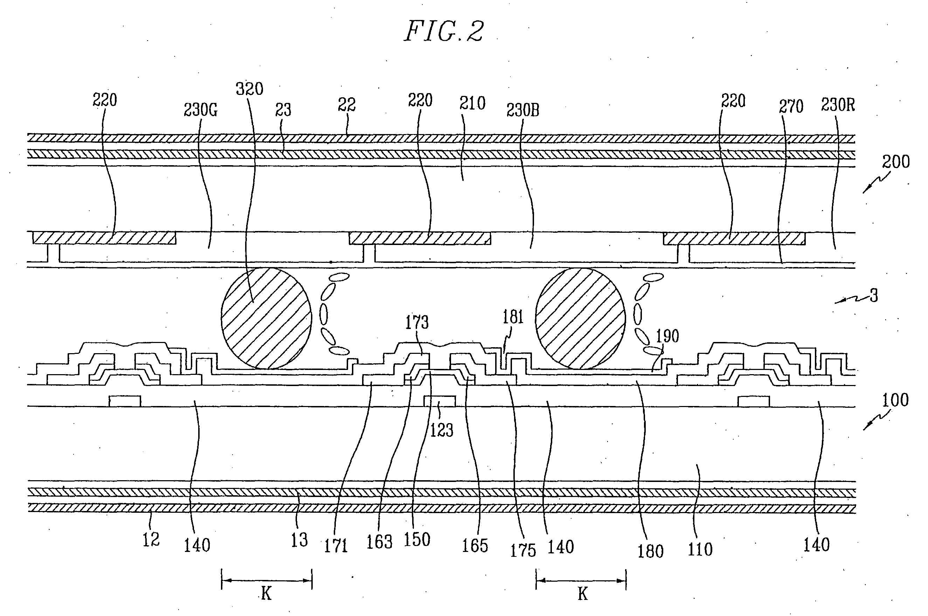

Fig. 1 is a layout view of LCDs according to an embodiment of the present invention, and Fig. 2 is a sectional view of the LCD shown in Fig. 1 taken along the line II-II'.

An OCB mode LCD according to this embodiment includes a TFT array panel 100, a color filter panel 200, a plurality of black spacers 320 are disposed between the panels 100 and 200 and make a gap between the panels 100 and 200, and a LC layer 3 filled in the gap, a pair of retardation films (or compensation films) 13 and 23 attached to outer surfaces of the panels 100 and 200, and a pair of polarization films 12 and 22 attached to outer surfaces of the retardation films 13 and 23.

A TFT array panel is described now.

A gate wire is preferable made of conductive material such as Al, Al alloy, Cr, Cr alloy, Mo, Mo alloy, Cr nitride, and Mo nitride. It is formed on an insulating substance 110 to a thickness of 1,000 - 3,500 Å.

The gate wire includes a plurality of gate lines 121 extending in a transverse direction and a plurality of gate electrodes 123 branched from the gate lines 121.

The gate wire may have a multi-layered structure including at least two layers, and it is preferred that the multi-layered structure includes at least one layer made of metal having a low resistance.

A gate insulating layer 140 is formed on the substrate 110, preferably made of silicon nitride or silicon oxide. It is about 3,500 - 4,500 Å thick and covers the gate wire.

A semiconductor layer 150 is formed on the gate insulating layer 140. The semiconductor layer 150 is preferably made of amorphous silicon and overlaps a plurality of gate electrodes 123. An ohmic contact layer 163 and 165 is formed on the semiconductor layer 150. The ohmic contact layers 163 and 165 are preferably made of amorphous silicon doped with conductive impurity and are about 500 - 800 Å thick.

A data wire is formed on the ohmic contact layer 163 and 165 and the gate insulating layer 140. The data wire is preferably made of conductive material such as Al, Al alloy, Cr, Cr alloy, Mo, Mo alloy, Cr nitride, and Mo nitride and is about 1,500 - 3,500 Å thick.

The data wire includes a plurality of data lines 171 extending in a longitudinal direction and intersecting the gate lines 121 to define a plurality of pixel areas, a plurality of source electrodes 173 branched from the data lines 171 and extending onto one portions 163 of the ohmic contact layer, and a plurality of drain electrodes 175 facing the source electrodes 173, extending from the other portions 165 of the ohmic contact layer to portions of the gate insulating layer 140 in the pixel areas.

The data wire may have a multi-layered structure including at least two layers, and it is preferred that the multi-layered structure includes at least one layer made of metal having a low resistance.

The data wire and the semiconductor layer 150 are covered with a passivation layer 180. The passivation layer 180 is made of insulating material such as silicon nitride and silicon oxide, and is about 1,500 - 2,500 Å thick.

The passivation layer 180 has a plurality of contact holes 181 exposing the drain electrodes 175. A plurality of pixel electrodes 190 are formed on the passivation layer 180 and connected to the drain electrodes 175 through the contact holes 181. The pixel electrodes 190 are made of transparent conductive material such as ITO and IZO.

The color filter panel 200 facing the TFT array panel 100 is described now.

A black matrix 220 facing portions of the gate lines 121, the data lines 171, and the TFTs of the TFT array panel is formed on a second insulating substrate 210.

A plurality of red color filters 230R, a plurality of green color filters 230G, and a plurality of blue color filters 230B are formed in sequence on the second the substrate 210 and the black matrix 220.

Entire surface of the panel including the red, the green and the blue color filters R, G and B is covered with a common electrode 270 made of ITO or IZO.

The LC layer 3 is aligned in an OCB (optically compensated birefringence) mode, which aligns nematic LC in splay state, converts the alignment state into bend state by applying a predetermined voltage, and adjusts applied voltages to control light transmittance.

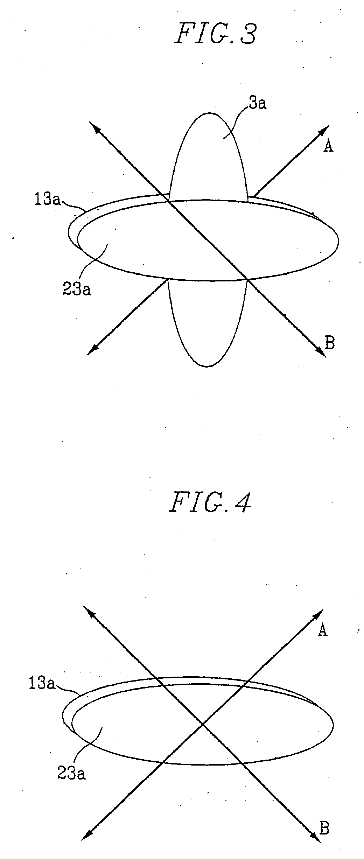

The polarizing axes of the polarization films 12 and 22 are crossing each other. It is preferable that the wavelength dispersion of the polarization films 12 and 22 is smaller than that of the LC layer 3. The dispersion of liquid crystal and compensation film is described in detail in the Korean Patent Application No. 2002-058995, entitled "OCB Mode Liquid Crystal Display and Driving Method of the Same", filed September 27, 2002 and assigned to the same assignee of the present Application, which is hereby incorporated by reference in its entirety. Figs. 3 and 4 illustrate indicatrices of light transmitting media at places provided with and without spacers in an OCB mode LCD, respectively, when viewing from the front of the LCD.

When a light passes through the LCD, as shown in Fig. 3, the polarization of the light after being linearly polarized by the polarizing film 12 is changed by an indicatrix 13a of the retardation film 13, and then changed by an indicatrix 3a of a LC layer 3. Subsequently, the light polarization is changed by an indicatrix 23a of the retardation film 23 and the light is blocked by the polarizing film 22. The crossed polarization axes of the polarization films 12 and 22 are indicated by A and B as shown in Fig. 3.

If the polarization of light is linearly polarized after passing through the retardation films 13 and 23 and the LC layer 3, the retardation films and LC layer compensates the birefringence of each other.

An OCB mode LCD has advantages of a wide viewing angle and a fast response time.

However, one of the drawback of the OCB mode LCD is that it shows a relatively high luminance in a black state because the liquid crystal molecules are arranged slanted when they are close to the substrates. In order to prevent such a high luminance at a black state, it usually employs retardation films that can block the light leakage. However, the total retardation given by the retardation films and the liquid crystal layer varies depending on the position since the spacers occupies portions of space in the gap instead of the liquid crystal material. In particular, it increases the light leakage in the black state near the spacers

In sum, the OCB mode LCD enhances its the black state using the retardation films 13 and 23, but it is not fully achieved around the spacers.

Since the liquid crystal layer 3 is replaced with the spacers 320, the retardation films 13 and 23 do not provide sufficient retardation for the polarized light to be blocked by the polarization film 22. That is, if the spacer 320 is not black, the linearly polarized light from the polarization film 12 changes its polarization by the indicatrix 13a and it passes thorough a spacer without changing its polarization. The light out of the spacer changes its polarization again when passing through the retardation film 23 and the light polarization out of the retardation film is not blocked by the polarization film 22.

However, one embodiment of the present invention uses black spacers 320 to prevent the light leakage.

It is preferable that the slow axes of the retardation films 13 and 23 are not parallel to the transmission axes or the absorption axes of the polarizers 12 and 22 for enhancing the light blocking of the black spacers 320.

In addition, it is preferable that the dispersion of the black spacers 320 be limited to a small number in order to reduce the light leakage. Although it is preferable that the dispersion density of the black spacers 320 is as small as possible, about 50 to 90 per square millimeter would be acceptable in order to achieve the cell gap uniformity.

According to experiments, the luminance in the black state when employing transparent spacers of about 130 to about 150 per square millimeter ranged about 2.00 to 2.3, while the luminance employing transparent spacers of 60 per square millimeter to about 80 per square millimeter ranged about 1.7 to about 1.9. On the other hand, the black-state luminance when employing black spacers ranged about 1.5 to about 1.7, which is lower than both cases of transparent spacers.

The alignment of liquid crystal molecules in OCB mode LCD is described in detail in the US Patent Application Publication No. 2002/0052247, entitled "LCD FOR SPEEDING INITIAL BEND STATE, DRIVER AND METHOD THEREOF", filed November 19, 2001 and assigned to the same assignee of the present application. In the OCB mode as seen in Fig.2, the alignment direction of the liquid crystal molecules on the surface of the substrates is parallel with each other and the tilt direction of the liquid crystal molecules on the surface of the substrates is opposite to each other, this alignment configuration is called "antiparallel".

A compensating method of the birefringence in OCB mode LCD is fully described in the US Patent Publication Number. 2003/0043325, entitled "LIQUID CRYSTAL DISPLAY WITH A WIDE VIEWING ANGLE USING A COMPENSATION FILM", filed June 13, 2001 and Application Number 10/713,426, entitled "LIQUID CRYSTAL DISPLAY WITH A WIDE VIEWING ANGLE USING A COMPENSATION FILM", filed November 17, 2003, both of which are assigned to the same assignee of the present application and are hereby incorporated by reference in its entirety.

In the OCB mode LCD, the non-zero retardation value of the liquid crystal layer in black state makes it necessary to compensate the retardation value of the liquid crystal layer by a compensation film or a retardation film. In the position of spacers, however there is no retardation because the spacer is made of optically isotropic material. Because the retardation value of the compensator is uniform regardless of whether it is occupied by a spacer or by liquid crystal material, the total retardation value at the spacer position is different from at the liquid crystal material position. A compensating method of the birefringence of OCB mode LCD in black state is fully described in the Korean Patent Application Number 2002-048056, entitled "OCB MODE LIQUID CRYSTAL DISPLAY AND A DRIVING METHOD OF THE SAME", filed August 14, 2002, and assigned to the same assignee of the present application, which is hereby incorporated by reference in its entirety.

One of the aspects of the OCB mode LCD is to minimize the total retardation value at the position of liquid crystal material. Therefore, at the spacer position, the retardation value of the compensation film changes the polarization state of the light that goes through the spacers. In the crossed polarizer, the change in polarization state of light induces light leakage, which degrades the black state.

Therefore, in order to improve the black state in an OCB mode LCD, it is necessary to reduce the number of the spacers. An experiment shows that about 90 spacers in one square millimeter lowers more than 10 % luminance in black state compared with about 150 spacers in one square millimeter. The black luminance of 90 spacers in one square millimeter is acceptable in commercial devices.

Another experiment shows that about 150 black spacers in one square millimeter lowers about 10 % luminance in black state compared with about 90 white spacers per one square millimeter. These experiments show that black spacers or reduced number of white (or transparent) spacers are necessary to improve black state in an OCB mode LCD. Usually the transmittance of light of the black spacers is below 3 %.

One embodiment of the present invention uses two crossed polarizer, one or two compensation films, liquid crystal molecules aligned in the plane around 45 degree from the transmittance direction of the polarizers when viewed from the top direction of the LCD. If the liquid crystal molecules are aligned parallel with polarizing direction of the polarizer, the device does not operate properly. To compensate the birefringence of the liquid crystal layer, the slow axis of the compensation film should cross the slow axis of the liquid crystal molecules when viewed from the top.

Details of the experiments are shown in the following table.

| Spacer Type | Spacer Maker | Spacer Number | Black Luminance | Evaluation |
|---|---|---|---|---|
| White Spacer | Sekisui | 130/mm2 | 2.0∼2.2 cd/m2 | Not Good |
| White Spacer | Sekisui | 90/mm2 | 1.7∼1.9 cd/m2 | Acceptable |
| Black Spacer | Natoco | 90/mm2 | 1.5∼1.7 cd/m2 | Good |

While the present invention has been described in detail with reference to the preferred embodiments, it is to be understood that the invention is not limited to the disclosed embodiments, but, on the contrary, is intended to cover various modifications and equivalent arrangements included within the scope of the appended claims.

## Claims

1. A liquid crystal display, comprising;
an upper substrate with a common electrode thereon;
a lower substrate with a pixel electrode thereon;
a liquid crystal layer injected between the upper substrate and the lower substrate;
spacers positioned between the upper substrate and the lower substrate,
wherein liquid crystal molecules on the both substrates are aligned antiparallel to each other or the alignment of the liquid crystal layer is optical compensated birefringency (OCB) type, and
the color of the spacers is black.

2. A liquid crystal display according to claim 1 wherein the liquid crystal molecules on both substrates are aligned antiparallel to each other.

3. A liquid crystal display according to claim 1, wherein the alignment of the liquid crystal layer is optical compensated birfringency (OCB) type.

4. A liquid crystal display according to claim 1, 2 or 3 wherein the number of spacers is less than 90 in one square millimeter.

5. A liquid crystal display, comprising;
an upper substrate with a common electrode and a color filter thereon;
a lower substrate with a pixel electrode, and an array of thin film transistors;
a liquid crystal layer injected between the upper substrate and the lower substrate;
spacers positioned between the upper substrate and the lower substrate;
wherein light transmittance of the spacers is lower than 3 % and number of the spacers is less than 90 in one square millimeter.

6. A liquid crystal display, comprising;
an upper substrate with a common electrode thereon;
a lower substrate with a pixel electrode thereon;
a liquid crystal layer injected between the upper substrate and the lower substrate;
spacers positioned between the upper substrate and the lower substrate,
wherein liquid crystal molecules of the liquid crystal layer on both the upper substrate and the lower substrate are aligned antiparallel to each other, and number of the spacers is less than 90 in one square millimeter.

7. A liquid crystal display of any preceding claim,
wherein the liquid crystal display further comprises a compensation film and a polarizer.

8. A liquid crystal display of claim 7,
a slow axis of the compensation film is not parallel to a transmittance axis of the polarizer.

9. A liquid crystal display of claim 8,
an angle between the slow axis of the compensation film and the transmittance axis of the polarizer is about 45 degrees.

10. A liquid crystal display of any of claims 7 to 9,
wherein the compensation film has a smaller dispersion of birefringence than the liquid crystal layer.

11. A liquid crystal display of any preceding claim,
wherein the spacers are ball type or column type.
